# EUROPEAN PATENT APPLICATION

(11) **EP 3 859 922 A1**
(43) Date of publication of application: **04.08.2021**
(21) Application number: 21152967.2
(22) Date of filing: 22.01.2021
(51) Int. Cl.: H02G 3/22, H02G 15/013

(54) **CABLE SEAL AND METHOD OF MANUFACTURE**

(30) Priority: 28.01.2020 EP 20154015
(71) Applicant: Aptiv Technologies Limited, St. Michael (BB)
(72) Inventor: Paletko, Grzegorz, 32-080 Zabierzow (PL); Gorzelak, Adam, 32-020 Woeliczka (PL); Budny, Paulina, 30-433 Krakow (PL); Uroda-Bigaj, Marta, 30-638 Krakow (PL); Bak, Szymon, 31-834 Krakow (PL); Kozak, Pawel, 31-422 Krakow (PL); Skawinska, Marcelina, 39-304 Czermin (PL); Kliszka, Artur, 30-399 Krakow (PL); Janicki, Karol, 34-130 Kalwaria Zebrzydowska (PL); Cieszynski, Michal, 30-612 Krakow (PL); Gawlik, Marcin, 30-363 Krakow (PL)
(74) Representative: Manitz Finsterwald Patent- und Rechtsanwaltspartnerschaft mbB

(57) **Abstract**

A method of manufacturing a cable seal is provided, the method comprising the steps of: providing a cable having a protective outer jacket of a non-PVC material; preparation of the protective outer jacket of the cable such as to promote adhesion with a sealant; and overmolding the outer jacket with a sealant. As a result, a sealing interface is formed between the jacket and the sealant.

## Description

### FIELD

The present disclosure relates to a cable seal and to a method of manufacturing a cable seal.

### BACKGROUND

Highly resistant sealing of single cables or cable bundles is a standard sealing method for harnesses, especially for firewall grommets. Polyurethane (PUR) foam can be used as a sealant to seal cables or e.g. ring terminal sealing cups. A sealing function is provided by adhesion to a protective outer jacket of a cable. However, if an outer jacket of a non-PVC material, e.g. of a silicone material or of a cross-linked polyethylene material (XPLE), is used, a tight and sealed connection of the whole assembly is difficult to achieve. More specifically, if a polyurethane material, e.g. a two-component PUR material is used as a sealant, it is difficult to be applied due to the non-adhesive behavior of the non-PVC cable jacket.

There is a need to provide an improved cable seal which can be manufactured at low cost and which provides a good sealing against water.

### SUMMARY

The present disclosure provides a cable seal and a method of manufacturing a cable seal according to the independent claims. Embodiments are given in the subclaims, the description and the drawings.

In one aspect, the present disclosure is directed to a method of manufacturing a cable seal, the method comprising the steps of: providing a cable of a cable having a protective outer jacket of a non-PVC material, e.g. of an XLPE material, preparation of the protective outer jacket of the cable such as to promote adhesion with a sealant, and overmolding the cable with a sealant.

According to this method, the outer jacket of the cable is prepared, e.g. chemically, mechanically or by the provision of additional means, such as to promote adhesion with a sealant.

According to an embodiment, the method comprises the use of a polyurethane material as the sealant. This allows the use of low pressure injection molding technology wherein the overmold of sealant may be molded to form a watertight and sealed outer enclosure of the cable, e.g. a grommet, splice or plug.

According to an embodiment, the method comprises the use of a cable having a protective outer jacket of a non-PVC material, e.g. an XLPE material, XLPO, SIR and other polyolefins, copolymers of polyolefins, crosslinked polyolefins and their co-polymers. Such materials provide a very poor adhesion to polyurethane materials. Therefore, the preparation step according to the present invention provides a substantial improvement to achieve a tight seal after overmolding the cable.

According to an embodiment, the method comprises the application of a tape onto the protective outer jacket of the cable. The cable can be a class T3 or T4 tape and it can be wrapped around a cable or around a plurality of cables which are to be overmolded with the sealant. If the cable is a PVC tape applied between the outer jacket and the sealant, the problem of lack of adhesion between the outer jacket and the sealant can be solved because PVC provides a good adhesion to polyurethane materials. The adhesion to the outer jacket can be achieved by using an adhesive glue on the tape, e.g. by using an adhesive PVC tape.

According to an embodiment, the method comprises the step of applying a tape of polyethylene terephthalate (PET) material, e.g. a PET fabric tape having a cloth structure. Such cloth structure provides a good adhesion to polyurethane materials and an adhesion to the protective outer jacket can be provided by using an adhesive tape.

According to an embodiment, the method comprises the step of applying a cold melt onto the protective outer jacket of the cable. Such cold melt has good adhesion properties not only to polyurethane materials but also to non-PVC materials such as XLPE.

In one aspect, the present disclosure is directed to a method of manufacturing a cable seal, the method comprising: Providing a cable having a protective outer jacket of a non-PVC material, providing a heat shrinkable sleeve, positioning the heat shrinkable sleeve over the protective outer jacket with an adhesive between the heat shrinkable sleeve and the outer jacket, heat shrinking the sleeve, and overmolding the sleeve and an adjacent region of the outer jacket with a sealant.

According to this method a highly resistant sealant, e.g. polyurethane (PUR) foam, of single wires or wire bundles can be applied on all types of non-PVC cable jackets such as XLPE, XLPO, SIR and other polyolefins, copolymers of polyolefins, crosslinked polyolefins and their co-polymers. In order to ensure compatibility and adhesion, an intermediate interface in the form of a heat shrinkable sleeve and an adhesive is applied. The heat shrinkable sleeve may be provided with a layer of adhesive. After heat shrinking a PUR foam can be overmolded according to a standard PUR foaming process. The intermediate structure consisting of the shrunk sleeve and the adhesive allows for an improved interconnection between the overmolded sealant and the cable.

According to a further embodiment a sleeve may be used which is made of a polyvinyl chloride (PVC), polyvinylidene fluoride (PVDF), or fluorinated ethylene propylene (FEP) material such that upon heat shrinking the sleeve tightly fits on and connects with the cable.

According to an embodiment, an elastic seal or sealing ring may be positioned between the adhesive and the outer jacket. Such sealing ring may be made of a silicone material and improves the sealing and the interlocking between the cable jacket and the overmolded sealant. Alternative materials for the sealing ring are rubber, PTFE or the like. An advantageous material for the seal is a rubber material or a silicone material. This ensures a mechanical sealing with all types of cable insulations.

According to a further embodiment, an adhesive can be applied to an inner surface of the sleeve. For example, the inner wall of the sleeve can be coated or laminated with an adhesive or a separate adhesive layer can be introduced between the sleeve and the outer jacket before heat shrinking.

According to a further embodiment, the preparation step comprises the application of a rubber or silicone material onto the protective outer jacket of the cable. Due to the tight grip between such seal, e.g. an annular sealing ring, an additional barrier for water penetration is provided and the sealing ring also provides a mechanical means for promoting the adhesion of the sealant to the outer jacket.

According to an embodiment, the elastic seal or sealing ring applied onto the protective outer jacket is one of a PVC material, a rubber, a PTFE or a silicone material. For example, the elastic seal or sealing ring may be formed of at least one of ethylene propylene rubber (EPR), nitrile butadiene rubber (NBR), Standard Indonesia Rubber (SIR), fluororubber (FPM), Ethylene acrylic rubber (AEM), fluorosilicone, fluorocarbon, and polyacrylate rubber.

According to an embodiment the preparation step comprises plasma treating or corona treating the protective outer jacket of the cable. The plasma treatment or corona treatment enables an adhesion of an outer jacket of the cable with a polyurethane overmolding. The plasma treatment or corona treatment of the protective outer jacket provides a waterproof application of the sealant and ensures high mechanical resistance against pull-out forces.

According to an embodiment, the preparation step comprises chemically treating the protective outer jacket of the cable with a solvent, e.g. by applying an alcohol, such as isopropanol. By chemically treating the protective outer jacket, the surface of the outer jacket is cleaned and contaminants are removed, which helps to avoid impurities to be formed on the surface which would otherwise prevent the adhesion of polyurethane sealants. Isopropanol is chemically neutral to the protective outer jacket and evaporates quickly. The treated surface tends to increase the adhesion evenly distributed over the surface of the outer jacket which leads to an increased tightness between the outer jacket and the sealant. Of course, it is also possible to use other solvents, such as acetone.

According to an embodiment the preparation step comprises a mechanical treatment of the protective outer jacket of the cable, e.g. a roughening of the outer jacket. Such roughening can be performed by means of an abrasive material, such as sandpaper or the like. Other mechanical treatment methods that can be used include sand blasting, soda blasting, and metal/non-metal brushing, e.g., using a wire brush.

According to a further embodiment the preparation step comprises the combined mechanical and chemical treatment of the outer jacket. After the outer jacket is mechanically treated to roughen the surface, remaining particles are removed by cleaning the outer jacket with a solvent, e.g. isopropanol. These two combined steps create a clean area with an increased contact surface between the outer jacket and the sealant. This leads to a modification of the surface energy and allows to build a connection between the overmold and the outer jacket that can be used as a water barrier.

In another aspect, the present disclosure is directed to a cable seal, in particular manufactured using a method described herein. The cable seal comprises a cable having a protective outer jacket and an overmolded sealant. The cable seal may comprise: A sleeve heat shrunk over a protective outer jacket of a cable, said outer jacket made of a non-PVC material, an adhesive between the sleeve and the outer jacket, and an overmold of sealant covering the sleeve and an adjacent region of the outer jacket.

According to an embodiment, the sealant is made of a polyurethane material. Such material is well suited for applying a sealant by low pressure injection molding with a 100% tight insulation against water, a resistance against oils, acids and chemicals and a resistance to temperature and vibrations. By overmolding a polyurethane material, it is further possible to implement markings or logos and to produce the overmolding in any desired color. Furthermore, a PUR overmold material may be solid or foam.

The present disclosure provides the possibility to apply wires with non-PVC jackets such as XLPE, XLPO, SIR and other polyolefins, copolymers of polyolefins, crosslinked polyolefins and their copolymers with all PUR applications by the use of a sealing interface. The sealing interface is the interface between the jacket and the sealant. The XLPE, XLPO cables are less expensive than PVC cables and have a higher flexibility. The final seal is 100% waterproof, ensures mechanical resistance (pull-out force) and reduces the material cost. The seal is applicable to both cable bundles and single cables (e.g. for eX HV products).

### DRAWINGS

Exemplary embodiments and functions of the present disclosure are described herein in conjunction with the following drawings, showing schematically in
- Fig. 1: an embodiment of a cable seal;
- Fig. 2: a further embodiment of a cable seal;
- Fig. 3: a further embodiment of a cable seal;
- Fig. 4: a plasma treatment of a cable;
- Fig. 5: a cross-section through a cable seal according to a further embodiment;
- Fig. 6: a cross-section of a further embodiment of cable seal; and
- Fig. 7: a cross-section of a further embodiment of cable seal.

### DETAILED DESCRIPTION

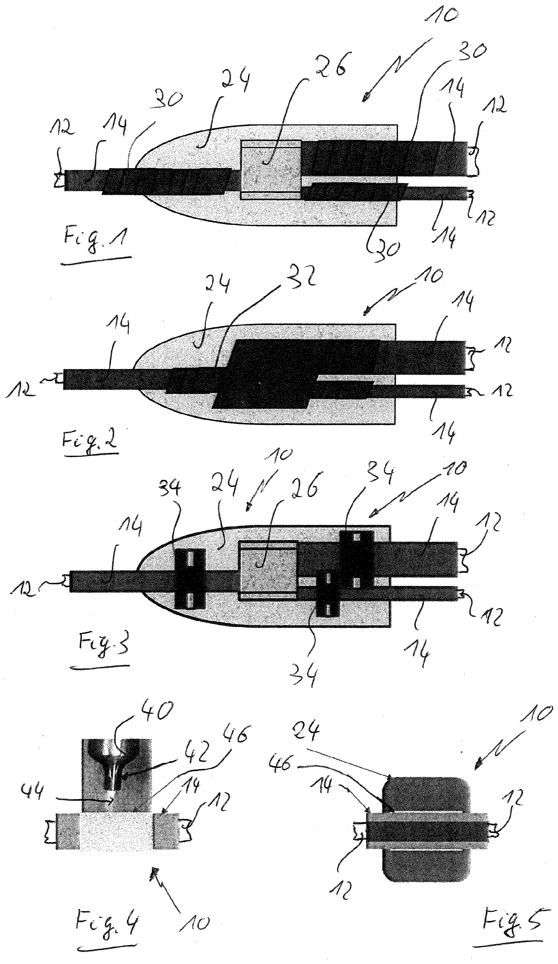

Fig. 1 depicts a seal 10 of a cable, the cable comprising one or more electrical or optical conductors 12 surrounded by a protective outer jacket 14 made of a non-PVC material, e.g. a polyolefin, polyethylene or silicone material.

The cable seal 10 comprises a splice, e.g. a copper splice 26 connecting the three electrical conductors 12. In the region of the copper splice 26 the cable seal 10 is provided with an overmold 24 of sealant, e.g. of a polyurethane foam material. To improve the adhesion between the outer jackets 14 and the sealant 24 an adhesive PVC tape 30, e.g. of class T3 or T4, is wrapped around the outer protective jackets 14 next to the copper splice 26. The overmold of sealant is applied with an excellent adhesion between the sealant 24 and the outer jackets 14 of the cables.

Fig. 2 depicts a further embodiment of a cable seal similar to the embodiment of Fig. 1 wherein the preparation of the protective outer jackets 14 is performed by applying a cold melt 32 onto the outer jackets 14 and onto the copper splice 26.

Fig. 3 depicts a further embodiment of a cable seal wherein sealing rings 34 of a rubber or silicone material are applied onto the protective outer jackets adjacent to the copper splice 26 to promote adhesion of the overmold of the sealant 24 and to provide a watertight sealing.

Fig. 4 depicts a cable comprising an electrical conductor 12 surrounded by an insulating jacket 14 wherein a plasma head 40 comprising a plasma nozzle 42 is used for treating the protective outer jacket 14 with a plasma beam 44 resulting in a plasma treated area 46 extending over the circumference of the outer jacket 14 which is made of a non-PVC material, e.g. of a XLPE material, or polyolefins, co-polymers of polyolefins, crosslinked polyolefins and their co-polymers.

Fig. 5 depicts a cross-section of a cable seal comprising the cable shown in Fig. 4 which has been overmolded with a sealant 24 of polyurethane foam. The preparation of the protective outer jacket 14 through application of atmospheric plasma significantly promotes the adhesion of the sealant 24 to the outer jacket 14.

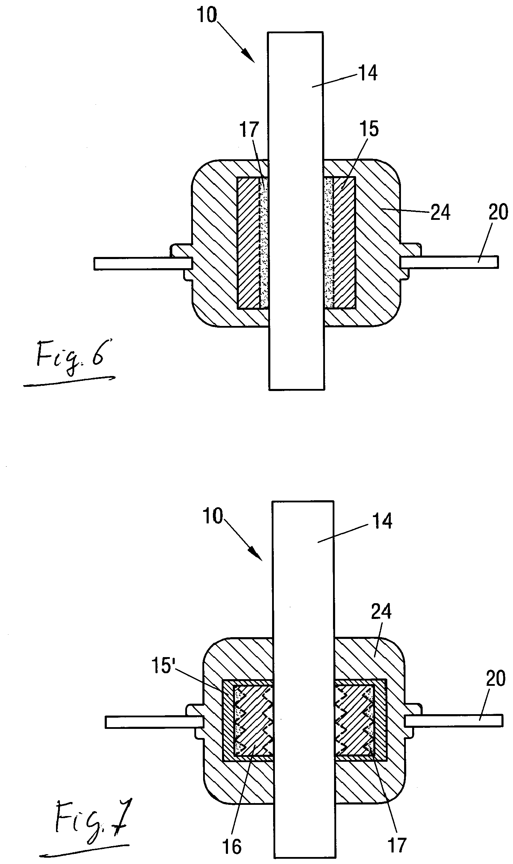

In an embodiment of a cable seal 10 as disclosed in Fig. 6 the cable extends through an opening in a wall 20. Before the cable 14 is inserted into the opening of the wall 20, a sleeve 15 which is made of heat shrinkable material (e.g. a polyvinyl chloride (PVC), polyvinylidene fluoride (PVDF), or fluorinated ethylene propylene (FEP) material) is positioned over the cable with an adhesive 17 being provided between the sleeve 15 and the outer jacket 14. The adhesive 17 may be provided as an adhesive layer on the inner circumference of the sleeve 15. Alternatively, the adhesive 17 may be provided as a separate sleeve or may be applied directly onto the outer jacket 14. After a placement of the sleeve 15 over the outer jacket 14 with the adhesive 17 between the sleeve 15 and the jacket 14 the sleeve 15 is heat shrunk onto the cable 10 wherein the adhesive 17 serves to fix against an axial displacement of the sleeve 15.

Thereafter, the cable may be inserted into the opening of the wall 20 such that the sleeve 15 extends through the opening and the sleeve 15 is provided with an overmolding of sealant 24 (e.g. PUR sealant), and the sealant may form a seal in the form of a grommet to seal and isolate against humidity and water.

Fig. 7 depicts a further embodiment of a cable seal with the same reference numerals used for the same elements.

The cable seal of Fig. 7 generally corresponds to the embodiment of Fig. 6 with similar components having the same reference numerals. An elastic sealing ring 16 is positioned between the adhesive 17 and the outer jacket 14 of the cable 10. As shown in the drawing, the elastic sealing ring 16 may be serrated e.g. by providing annular groves at the inner or outer circumference such as to provide improved sealing properties and an interlocking between the sealing ring 16 and the adhesive 17 on the one hand and the sealing ring 16 and the outer jacket 14 on the other hand. The sealing ring 16 may be made of a rubber, a PTFE, or a silicone material. For example, the sealing ring 16 may be made of ethylene propylene rubber (EPR), nitrile butadiene rubber (NBR), Standard Indonesia Rubber (SIR), fluororubber (FPM), Ethylene acrylic rubber (AEM), fluorosilicone, fluorocarbon, or polyacrylate rubber.

In this embodiment a sleeve 15' is heat shrunk onto the outer jacket 14 such as to encapsulate the sealing ring 16 not only at its outer circumference but also on both opposite side surfaces. However, this is merely an optional feature and not mandatory.

In both embodiments the overmold of sealant 24 fully encapsulates the sleeve 15 and the adhesive 17.

## Claims

1. A method of manufacturing a cable seal, the method comprising the steps of:
- providing a cable (10) having a protective outer jacket (14) of a non-PVC material;
- preparation of the protective outer jacket (14) of the cable (10) such as to promote adhesion with a sealant (24); and
- overmolding the outer jacket (14) with a sealant (24).

2. The method of claim 1,
wherein the sealant (24) is a polyurethane material, optionally a polyurethane (PUR) foam material.

3. The method of any of the preceding claims,
wherein the preparation step comprises:
applying a tape, optionally comprising a class T3 or T4 tape, onto the protective outer jacket (14) of the cable (10).

4. The method of claim 3,
wherein the tape is an adhesive tape.

5. The method of claim 3 or 4,
wherein the tape is a PVC tape.

6. The method of claim 3 or 4,
wherein the tape is a PET tape, optionally being a PET fabric tape.

7. The method of claim 1 or 2,
wherein the preparation step comprises:
applying a cold melt onto the protective outer jacket (14) of the cable (10).

8. The method of any of the preceding claims,
wherein the overmolded sealant (24) is formed as a grommet, splice or plug.

9. The method of any of the preceding claims, further comprising the steps of:
- providing a heat shrinkable sleeve (15, 15');
- positioning the heat shrinkable sleeve (15, 15') over the protective outer jacket (14) with an adhesive (17) between the heat shrinkable sleeve (15, 15') and the outer jacket (14);
- heat shrinking the sleeve (15, 15'); and
- overmolding the sleeve (15, 15') and an adjacent region of the outer jacket (14) with a sealant (24)

10. The method of claim 9,
wherein the sleeve (15, 15') is made of a polyvinyl chloride, PVC, polyvinylidene fluoride, PVDF, or fluorinated ethylene propylene, FEP, material.

11. The method of any of the preceding claims,
wherein an elastic seal (16) is positioned around the outer jacket (14).

12. The method of any one of claims 9 - 11,
wherein the adhesive (17) is applied to an inner surface of the sleeve (15, 15').

13. The method of claim 11,
wherein the seal (16) is made of a rubber, a PTFE, or a silicone material.

14. The method of any of the preceding claims,
wherein the preparation step comprises:
plasma treating or corona treating the protective outer jacket (14) of the cable (10).

15. The method of any of the preceding claims,
wherein the preparation step comprises:
chemically treating the protective outer jacket (14) of the cable (10) with a solvent.

16. The method of any of the preceding claims,
wherein the preparation step comprises:
mechanically treating the protective outer jacket (14) of the cable (10), the mechanical treatment comprising at least one of
roughening the outer jacket (14), using an abrasive material;
sand blasting;
soda blasting; or
metal/non-metal brushing.

17. A cable seal comprising a cable (10) having a protective outer jacket (14), and an overmolded sealant (24), manufactured using a method in accordance with any of the preceding claims.

18. The cable seal of claim 17,
wherein the sealant (24) is made of a polyurethane material, optionally a PUR foam material.

19. The cable seal of claim 17 or 18,
comprising a sleeve (15, 15') comprising a polyvinyl chloride, PVC, polyvinylidene fluoride, PVDF, or fluorinated ethylene propylene, FEP, material.

20. The cable seal of any of claims 17 to 19,
wherein an elastic seal (16) is positioned around the outer jacket (14).

21. The cable seal of claim 20,
wherein the elastic seal (16) is made of a rubber, a PTFE, or a silicone material.

22. The cable seal of claim 20 or 21,
wherein the elastic seal is a sealing ring (16) provided with grooves at its inner and/or outer circumference.

23. The cable seal of claims 19 and 22,
wherein the sleeve (15') encapsulates the sealing ring (16).
